Europäisches Patentamt

European Patent Office

Office européen des brevets

(19)

(11) Veröffentlichungsnummer: **0 347 667**
**A2**

(12) **EUROPÄISCHE PATENTANMELDUNG**

(21) Anmeldenummer: 89110460.6

(51) Int. Cl.⁴: **C04B 35/00**

(22) Anmeldetag: 09.06.89

(30) Priorität: 22.06.88 DE 3820961

(43) Veröffentlichungstag der Anmeldung:
27.12.89 Patentblatt 89/52

(84) Benannte Vertragsstaaten:
**DE FR GB SE**

(71) Anmelder: **BAYER AG**

**D-5090 Leverkusen 1 Bayerwerk(DE)**

Anmelder: **S. LOEVENICH & COMP.**
**Koelner Strasse 72**
**D-5020 Frechen(DE)**

(72) Erfinder: **Gugel, Ernst, Prof. Dr.**
**Lauterburgstrasse 47 a**
**D-8633 Roedental(DE)**
Erfinder: **Petzenhauser, Isfried, Dr.**
**Langer Rain 44**
**D-8633 Roedental(DE)**

(54) **Zirkonylphosphat-Keramik, Verfahren zu ihrer Herstellung sowie deren Verwendung.**

(57) Die vorliegende Erfindung betrifft Zirkonylphosphat-Keramikkörper mit hoher Festigkeit und guter Temperaturwechselbeständigkeit, Verfahren zu ihrer Herstellung sowie deren Verwendung.

EP 0 347 667 A2

## Zirkonylphosphat-Keramik, Verfahren zu ihrer Herstellung sowie deren Verwendung

Die vorliegende Erfindung betrifft Zirkonylphosphat-Keramikkörper mit hoher Festigkeit und guter Temperaturwechselbeständigkeit, Verfahren zu ihrer Herstellung sowie deren Verwendung.

Aus J. Am. Ceram. Soc., 68 (5) 273-78 (1985) ist bekannt, daß sich Zirkonylphosphat ohne Zusätze nicht zu Werkstoffen nennenswerter Festigkeit sintern läßt.

Weiterhin geht aus der DE-A 36 09 730 hervor, daß sich aus Mischungen von Zirkonylphosphat mit Verdichtungshilfen, wie Magnesiumoxid, Zinkoxid, Bismutoxid, Manganoxid, Eisenoxid, Kobaltoxid, Nickeloxid, Titanoxid, Ceroxid, Nioboxid, Tantaloxid oder Mischungen aus diesen Oxiden, Pulvermischungen herstellen lassen, die sich durch Sintern bei 1200 bis 1700°C zu Keramiken niedriger Wärmedehnung und hoher Festigkeit verdichten lassen.

Weiterhin wird beschrieben, daß Zusätze von Kornwachstumsverzögerern, wie $SiO_2$ oder Metallsilikate, mit den bekannten Verdichtungsmitteln günstige Ergebnisse erbringen.

Alle diese Mischungen haben gemeinsam, daß sich beim Sintern Schmelzen aus Metallorthophosphaten bilden, die das Verdichten des Zirkonylphosphates ermöglichen. Die entstandenen Keramikkörper sind somit alle mehrphasig, was bedeutet, daß neben α-Zirkonylphosphat noch andere Stoffe in den Werkstoffen in Mengen von über 1 % vorhanden sind.

Nachteil solcher Gemische ist es, daß sich beim Langzeiteinsatz bei hoher Temperatur oder gar bei Anwendungstemperaturen, die über der Herstellungstemperatur liegen, irreversible Eigenschaftsveränderungen ergeben. Dies ist umso weniger der Fall, je weniger Schmelzphase beim Erhitzen auftritt.

Aufgabe der vorliegenden Erfindung war es somit, Zirkonylphosphat-Keramikkörper zur Verfügung zu stellen, die die beschriebenen Nachteile nicht aufweisen.

Überraschenderweise wurde nun gefunden, daß diese Forderungen in hervorragender Weise von Zirkonylphosphat-Keramikkörpern erfüllt werden, die durch Brennen von Zirkonylphosphatkörpern in Gegenwart von antimonhaltigen Verbindungen erhalten werden. Hierbei werden Zirkonylphosphat-Keramikkörper erhalten, die praktisch nur aus Phosphaten des Zirkons bestehen.

Gegenstand dieser Erfindung sind somit Zirkonylphosphat-Keramikkörper mit hoher Festigkeit und guter Temperaturwechselbeständigkeit, die außer Zirkonyl- und/oder Zirkonphosphaten keine weitere Phase in Mengen von über 1 Gew.-% enthalten. Sie weisen bevorzugt Antimongehalte von weniger als 0,5 Gew.-% auf. Besonders bevorzugt betragen die Gehalte an Antimon weniger als 0,1 Gew.-%. Es handelt sich also hierbei um sehr reine Zirkonylphosphat-Keramikkörper ohne artfremde Bindephasen, die bei ausreichender Biegefestigkeit thermoschockbeständig sind und gleichzeitig eine gute Langzeitfestigkeit aufweisen. In einer bevorzugten Ausführungsform weist die Biegefestigkeit Werte von >20 $N/mm^2$ auf.

Diese erfindungsgemäßen Zirkonylphosphat-Keramikkörper sind dadurch erhältlich, daß ihre Herstellung in Gegenwart von Antimonverbindungen durchgeführt wird. So werden zu Zirkonylphosphat oder unter den Reaktionsbedingungen Zirkonylphosphat bildenden Substanzen Antimonverbindungen zugemischt und Pulverpreßlinge aus diesem Material durch Sintern erhalten.

Bei den Antimonverbindungen handelt es sich um $Sb_2O_3$, $Sb_2O_5$ und/oder $Sb_2O_4$ oder Verbindungen, die beim Erhitzen diese Oxide bilden.

Gegenstand dieser Erfindung ist somit auch ein Verfahren zur Herstellung von Zirkonylphosphat-Keramikkörpern mit hoher Festigkeit und guter Temperaturwechselbeständigkeit, welches dadurch gekennzeichnet ist, daß Zirkonyl phosphat und /oder unter den Reaktionsbedingungen Zirkonylphosphat bildende Substanzen mit Antimonverbindungen gemischt werden, einer Formgebung unterworfen und bei Temperaturen von 1200 bis 1700°C gebrannt werden. Der Antimonoxidgehalt der Rohlinge vor dem Brand beträgt dabei bevorzugt zwischen 4 und 30 Gew.-% berechnet als Antimonoxid ($Sb_2O_4$). Während des Brennens findet eine fast vollständige Verdampfung der Antimonoxide statt. Um zu besonders hochwertigen Produkten zu gelangen, ist es vorteilhaft, die beschriebenen Mischungen so lange zu brennen, bis alles oder fast alles Antimonoxid verdampft ist. Nach dem Brand sind gegebenenfalls nur noch Spuren Antimon in der Keramik nachzuweisen.

In einer alternativen Ausführungsform des erfindungsgemäßen Verfahrens werden Zirkonylphosphat und /oder Zirkonylphosphat bildende Substanzen mit Antimonoxid durch Mischen und Brennen zu antimonhaltigem Zirkonylphosphat vorsynthetisiert. Nach geeigneter Aufmahlung, gegebenenfalls Mischung mit nicht vorsynthetisiertem Material, Formgebung und Brand werden hierbei praktisch antimonfreie Keramiken erhalten, welche Festigkeiten von über 60 $N/mm^2$ aufweisen.

Es hat sich darüber hinaus gezeigt, daß Einsatz von Antimonoxiden auch graduell die bekannten Zumischungen der in der Literatur beschriebenen Oxiden in ihrer Wirksamkeit verbessern kann, bzw. diese dadurch in ihrem Gehalt reduziert werden können.

Die erfindungsgemäß hergestellten Keramiken weisen hohe Stabilität ihrer Festigkeit nach langer Temperatureinwirkung auf, wie sie im technischen Einsatz vorkommen kann. Die Keramiken sind thermoschockbeständig, selbst ein örtliches Erhitzen mit einem Schneidbrenner auf Weißglut zerstört den Werkstoff nicht. Nach solchen Behandlungen wurden auch keine Festigkeitsabnahmen beobachtet.

Gegenstand dieser Erfindung ist auch die Verwendung der erfindungsgemäßen Zirkonylphosphat-Keramikkörper als keramische Filter oder Bauteile in Verbrennungsmotoren, wie z.B. als Portliner.

Im folgenden wird die Erfindung beispielhaft erläutert, ohne daß dadurch eine Beschränkung zu sehen ist.

Beispiel 1

500 g eines $\beta$-Zirkonylphosphat-Pulvers einer Korngröße von <10 $\mu$m wurde mit 9 Gew.-% $Sb_2O_3$ gemischt, zu Tabletten von 5 mm Dicke verpreßt und 4 Stunden bei 1400 °C gebrannt. Die so erhaltenen Keramikplättchen wurden aus dem heißen Ofen genommen und abgeschreckt. Sie hatten eine Biegefestigkeit von 21 N/mm², eine offene Porosität von 14 % und einen Wärmeausdehnungskoeffizienten von 1 · $10^{-6}$/K für den Temperaturbereich 20 bis 1000 °C mit nahezu linearem Verlauf und sehr enger Hysteresekurve.

Beispiel 2

500 g $\beta$-Zirkonylphosphat wurden mit 100 g $Sb_2O_3$ versetzt zu Tabletten verpreßt und bei 1200 °C calciniert. Das entstandene Produkt, das 15,1 % $Sb_2O_4$ enthielt wurde in einer Scheibenschwingmühle auf eine Korngröße unter 63 um gebracht, zu Tabletten verpreßt und wie Beispiel 1 gesintert. Die Keramik hatte eine Biegefestigkeit von 60 N/mm² bei einer Porosität von 6 % und einem Wärmedehnungskoeffizienten von 1,2 · $10^{-6}$/K mit nahezu linearem Verlauf und sehr enger Hysteresekurve.

Entsprechend den Beispielen 1 und 2 hergestellte Keramiken in Scheibenform mit 4,5 cm Durchmesser wurden 168 Std. bei 1400 °C getempert. Eine Abnahme der Festigkeit wurde nicht beobachtet. Die Keramiken wiesen einen so hohen Widerstand gegen Thermoschock auf, daß 1400 °C heiße Platten in kaltem Wasser abgeschreckt werden konnten ohne zu zerspringen.

**Ansprüche**

1. Zirkonylphosphat-Keramikkörper mit hoher Festigkeit und guter Temperaturwechselbeständigkeit, dadurch gekennzeichnet, daß sie außer Zirkonyl- und/oder Zirkonphosphaten keine weitere Phase in Mengen von über 1 Gew.-% enthalten.

2. Zirkonylphosphat-Keramikkörper gemäß Anspruch 1, dadurch gekennzeichnet, daß sie Antimongehalte von weniger als 0,5 Gew.-%, bevorzugt von weniger als 0,1 Gew.-%, aufweisen.

3. Zirkonylphosphat-Keramikkörper gemäß einem der Ansprüche 1 oder 2, dadurch gekennzeichnet, daß sie eine Biegefestigkeit von >20 N/mm² aufweisen.

4. Zirkonylphosphat-Keramikkörper gemäß einem der Ansprüche 1 bis 3, dadurch erhältlich, daß ihre Herstellung in Gegenwart von Antimonverbindungen durchgeführt wird.

5. Verfahren zur Herstellung von Zirkonylphosphat-Keramikkörper gemäß einem der Ansprüche 1 bis 4, dadurch gekennzeichnet, daß Zirkonylphosphat und/oder unter den Reaktionsbedingungen Zirkonylphophat bildende Substanzen mit Antimonverbindungen gemischt, einer Formgebung unterworfen und bei Temperaturen von 1200 bis 1700 °C gebrannt werden.

6. Verfahren gemäß Anspruch 5, dadurch gekennzeichnet, daß der Antimonoxidgehalt der Rohlinge vor dem Brand 4 bis 30 Gew.-%, berechnet als Antimonoxid ($Sb_2O_4$), beträgt.

7. Verfahren gemäß einem der Ansprüche 5 oder 6, dadurch gekennzeichnet, daß so lange gebrannt wird, bis alles oder fast alles Antimonoxid verdampft ist.

8. Verfahren gemäß einem der Ansprüche 5 bis 7, dadurch gekennzeichnet, daß Zirkonylphosphat und/oder Zirkonylphosphat bildende Substanzen mit Antimonoxid durch Mischen und Brennen zu antimonhaltigem Zirkonylphosphat vorsynthetisiert werden.

9. Verwendung der Zirkonylphosphat-Keramikkörper gemäß einem der Ansprüche 1 bis 8 als keramische Filter oder Teile in Verbrennungsmotoren.